# EUROPÄISCHE PATENTSCHRIFT

(11) **EP 2 648 965 B1**
(45) Veröffentlichungstag und Bekanntmachung des Hinweises auf die Patenterteilung: **20.07.2016**
(21) Anmeldenummer: 11776092.6
(22) Anmeldetag: 15.10.2011
(51) Int. Cl.: B62D 29/04

(54) **KRAFTFAHRZEUGKAROSSERIE MIT VERSTEIFUNGSSTREBEN**
MOTOR VEHICLE BODY WITH STIFFENING STRUTS
CARROSSERIE DE VÉHICULE AUTOMOBILE ÉQUIPÉE DE TRAVERSES DE RENFORCEMENT

(30) Priorität: 08.12.2010 DE 102010053850
(43) Veröffentlichungstag der Anmeldung: 16.10.2013
(73) Patentinhaber: Daimler AG, 70327 Stuttgart (DE)
(72) Erfinder: HEISE, Wilfried, 72108 Rottenburg (DE); SALKIC, Asmir, 89077 Ulm (DE)
(74) Vertreter: JENSEN & SON
(86) Internationale Anmeldenummer: PCT/EP2011/005184
(87) Internationale Veröffentlichungsnummer: WO 2012/076072

(56) Entgegenhaltungen:
- EP-A1- 0 577 409
- EP-A1- 1 600 362
- DE-A1-102004 018 977
- US-A- 4 693 140
- US-A1- 2005 248 113

## Beschreibung

Die Erfindung betrifft eine Kraftfahrzeugkarosserie mit Versteifungsstreben, insbesondere eine Karosserie eines Cabriolet-Fahrzeugs.

Zur Versteifung von Kraftfahrzeugkarosserien, insbesondere von Cabriolets, werden am Unterboden Diagonalstreben eingesetzt. Üblicherweise werden vier metallische Diagonalstreben kreuzförmig am Unterboden des Fahrzeugs befestigt, um die Karosseriesteifigkeit nahezu zu verdoppeln. Diagonalstreben, die eine maximale Steifigkeit bieten, sind bekanntermaßen aus Stahl gefertigt, wobei sich nachteilig durch den Stahl eine im Sinne der Leichtbauweise und der Fahrökonomie unerwünschte Gewichtserhöhung der Karosserie ergibt.

In der DE 10 2009 053 979 A1 ist eine Diagonalstrebenanordnung beschrieben, die unterhalb des Fahrzeugbodens angeordnet ist um einer Karosserie eine verbesserte Steifigkeit zu verleihen. Ein Ende jeder Diagonatstrebe ist an dem Seitenschweller der Karosserie festgelegt, während das andere Ende an einer Mulde befestigt ist, die im Stauraumbereich des Kraftwagens angeordnet ist. Diese Mulde, die beispielsweise zur Aufnahme eines Ersatzrads dient, kann zur Verringerung des Gewichts aus einem faserverstärkten Kunststoff gefertigt sein.

Um die Möglichkeiten eines Strebenvertaufs und deren Anbindung an die Karosserie zu erweitern, beschreibt die gattungsgemäße DE 10 2004 018 977 A1 ein Kraftfahrzeug mit einer Karosserie, deren Unterbodenbereich zumindest zwei aussteifende Streben zugeordnet sind, die jeweils von einer Karosserieanbindungsstelle aus mit einer Komponente in Richtung auf eine vertikale Längsmittelebene verlaufen. Dort ist ein Verbindungsträger vorgesehen, der frei unter dem Unterboden und mit Abstand zu diesem angeordnet ist und an dem die Streben festgelegt sind.

Schließlich beschreibt die DE 10 2008 056 146 A1 eine Verkleidung für einen Unterboden eines Kraftwagens, die den Widerstand beziehungsweise die Versteifung gegen die im Stillstand und bei Fortbewegung des Fahrzeug auftretenden Torsionsbelastungen vergrößern soll. Diese Verkleidung soll einfach, kostengünstig und stabil sein. Dazu ist die Verkleidung aus einem faserverstärkten Kunststoff, und zwar insbesondere aus einer Sheet Molding Compound gebildet.

Ausgehend von diesem Stand der Technik ergibt sich die Aufgabe, eine mittels Streben versteifte Kraftfahrzeugkarosserie zu schaffen, deren Gewicht bei gleichzeitigem Erhalt einer maximalen Versteifung deutlich verringert ist, um so eine Verringerung des Brennstoffverbrauchs des Fahrzeugs zu ermöglichen.

Diese Aufgabe wird durch die Kraftfahrzeugkarosserie mit den Merkmalen des Anspruchs 1 gelöst. Weiterbildungen der erfindungsgemäßen Kraftfahrzeugkarosserie sind in den Unteransprüchen ausgeführt.

Eine erste Ausführungsform der erfindungsgemäßen Kraftfahrzeugkarosserie mit Versteifungsstreben aus einem Faserverbundwerkstoff (FVK-Material), wobei jede Versteifungsstrebe beidenends über einen Anbindungsabschnitt an dem jeweils angrenzenden Karosseriebauteil angebunden ist, weist erfindungsgemäß einen im Wesentlichen unidirektionalen Faserverlauf der FVK-Fasern in Belastungsrichtu !er FVK-Versteifungsstrebe auf. Ferner bleibt die Querschnittsfläche der Versteifungsstrebe entlang der Strebenlänge im Wesentlichen gleich; eine Abweichung der Querschnittsfläche an den Anbindungsabschnitten ist möglich. Damit wird vorteilhaft erreicht, dass die Versteifungsstreben trotz ihrer Leichtbauweise eine sehr hohe Steifigkeit aufweisen und daher geeignet sind, sogar zur Versteifung von Cabriolet-Karosserien eingesetzt zu werden, obgleich gerade im Cabriolet-Bau besonders hohe Anforderungen an die Stabilität der Karosserien gestellt werde.

Für eine vorgegebene Kraftfahrzeugkarosserie wird dabei die Querschnittsfläche der FVK-Versteifungsstrebe so gewählt, dass das Produkt der Querschnittsfläche mit dem E-Modul der FVK-Versteifungsstrebe einem Produkt entspricht, das sich aus einer Querschnittsfläche einer Stahl-Versteifungsstrebe und deren E-Modul für die vorgegebene Kraftfahrzeugkarosserie ergibt, so dass die erfindungsgemäße FVK-Versteifungsstrebe der Karosserie die gleiche Steifigkeit verleiht wie die entsprechende Stahlstrebe. Dazu wird die Querschnittsfläche der FVK-Versteifungsstrebe größer gewählt als sie bei der entsprechenden Stahlstrebe sein müsste. Die Vergrößerung der Querschnittsfläche der FVK-Versteifungsstrebe sollte wenigstens 20 %, bevorzugt wenigstens 25 % und besonders bevorzugt wenigstens 30 % betragen in Bezug auf die Querschnittsfläche der entsprechenden Stahl-Versteifungsstrebe.

So ist es möglich, die Kraftfahrzeugkarosserie mit Versteifungsstreben aus Faserverbundwerkstoff mindestens in einem Ausmaß zu versteifen, wie es im Stand der Technik mittels Stahlstreben erreicht wird. Dabei wird durch die erfindungsgemäße Strebengestaltung vorteilhaft eine deutliche Gewichtseinsparung von bis zu 60 % erreicht, wenn eine für eine Karosserie geeignete Stahlstrebe durch eine erfindungsgemäße Faserverbundwerkstoffstrebe ersetzt wird.

Zum Schutz gegen mechanische Beschädigungen, wie beispielsweise Steinschlag, können die Versteifungsstreben von einer Schutzschicht umhüllt sein.

Bei dieser Schutzschicht kann es sich beispielsweise um ein Faservlies oder um eine Faserwicklung, insbesondere um eine Glasfaserwicklung handeln. Eine alternative Schutzschicht kann durch ein abriebfestes, schlagzähes Material wie etwa ein Stahlgeflecht oder eine Stahlfolie gebildet werden; denkbar ist aber auch der Einsatz eines thermoplastischen oder elastomeren Materials als Schutzschicht, das insbesondere in Form eines Schrumpfschlauchs auf die Versteifungsstrebe aufgebracht werden kann.

Die Fasern der Schutzschicht aus Faserwicklung können zur Verbesserung der Stabilität und der Schutzwirkung mit einem Winkelversatz in Bezug zu den im Wesentlichen unidirektionalen Fasern der Versteifungsstrebe angeordnet sein.

Vorzugsweise ist die Versteifungsstrebe eine pultrudierte Faserverbundwerkstoff-Versteifungsstrebe, die einen Fasergehalt im Bereich von 50 % bis 75 %, bezogen auf das Gesamtvolumen des Faserverbundwerkstoffs, bevorzugt von 65 %, am meisten bevorzugt von 70 % aufweist und die damit eine hohe Steifigkeit erlangt.

Der Faserverbundwerkstoff zur Bildung der Versteifungsstrebe mit den unidirektional angeordneten Verstärkungsfasern kann aus Carbonfasern in duroplastischer oder thermoplastischer Matrix gebildet sein, denkbar ist aber auch eine Mischbauweise als Hybrid-Faserverbundwerkstoff mit einer Leichtmetalllegierungsmatrix. Generell ist auch denkbar, dass der Faserverbundwerkstoff einen Anteil von Metallfasern oder ein Metallgewebe enthält.

Weiter ist auch eine Werkstoff-Hybridisierung, beispielsweise mit einem Metallkern möglich.

Das Fügekonzept der erfindungsgemäßen Versteifungsstreben vor Anbindung an die Kraftfahrzeugkarosserie sieht vor, dass die Anbindungsabschnitte der Versteifungsstreben jeweils eine Fügestelle mit jeweils wenigstens einer Durchtrittsöffnung aufweisen, in der ein Verbindungselement, wie etwa eine Schraube Aufnahme findet.

Die Durchtrittsöffnung kann nach der Fertigung der Versteifungsstrebe gefräst sein; die Durchtrittsöffnung kann aber auch als eine Aussparung im Herstellungsprozess vorgesehen sein. Ferner ist es denkbar, dass die Durchtrittsöffnung durch ein im Herstellungsprozess oder nachträglich eingefügtes Insert bereitgestellt wird.

Ferner ist es für die Kraftfeinleitung in die FVK-Versteifungsstrebe vorteilhaft, wenn die Durchtrittsöffnung von einem Faserverstärkungsbereich umgeben ist. Dabei können die Fasern ringförmig konzentrisch, tangential und/oder radial um die Durchtrittsöffnung angeordnet sein, ähnlich der Gestaltung eines Spinnennetzes oder einer Zielscheibe.

Der gesamte Anbindungsabschnitt oder zumindest die Fügestelle kann mit einer Verstärkungsstruktur ausgestattet sein. Dabei kann es sich beispielsweise um d nen liegenden Metallkern, das Insert oder eine Metallverkleidung der Fügestelle oder des Anbindungsabschnitts handeln. Diese Verstärkungsstruktur kann im Herstellungsprozess in die Versteifungsstrebe eingearbeitet worden sein, so dass die Verstärkungsstruktur mit der Versteifungsstrebe integral gefertigt ist. Sie kann auch nachträglich damit verklebt werden; dann befindet sich zwischen der Verstärkungsstruktur und der Versteifungsstrebe eine Adhäsivschicht. Die Adhäsivschicht wirkt einer Korrosion der metallischen Anbindungsstelle der Karosserie entgegen, insbesondere wenn die Versteifungsstrebe aus CFK gefertigt ist.

Bei der mittels der erfindungsgemäßen Versteifungsstrebe zu versteifenden Kraftfahrzeugkarosserie kann es sich insbesondere um eine Cabriolet-Karosserie handeln.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine schematische Seitenansicht des Anbindungsabschnitts einer erfindungsgemäßen Versteifungsstrebe,
- Fig. 2: eine Ansicht entsprechend Fig. 1 einer alternativen Ausführungsform,
- Fig. 3: eine Ansicht entsprechend Fig. 1 in noch einer alternativen Ausführungsform,
- Fig. 4: eine Ansicht entsprechend Fig. 1 in noch einer alternativen Ausführungsform,
- Fig. 5: eine Ansicht entsprechend Fig. 1 in noch einer alternativen Ausführungsform,
- Fig. 6: eine Ansicht entsprechend Fig. 1 in noch einer weiteren Ausführungsform,
- Fig. 7: eine Ansicht entsprechend Fig. 1 in noch einer weiteren Ausführungsform,
- Fig. 8: eine Ansicht entsprechend Fig. 1 in noch einer weiteren Ausführungsform,
- Fig. 9: eine Ansicht entsprechend Fig. 1 in noch einer weiteren Ausführungsform,
- Fig. 10: eine Schnittansicht durch den Anbindungsabschnitt einer erfindungsgemäßen Versteifungsstrebe mit dargestellter Schraube,
- Fig. 11: eine perspektivische Schnittansicht durch die Fügestelle des Anbindungsabschnitts entsprechend Fig. 10,
- Fig. 12: eine Seitenschnittansicht einer Versteifungsstrebe mit Schutzhülle,
- Fig. 13: eine Draufsicht auf den Anbindungsbereich mit Durchtrittsöffnung, wobei die Versteifungsstrebe von einer Schutzschicht umgeben ist,
- Fig. 14: eine schematische Schnittdarstellung durch den Anbindungsbereich einer erfindungsgemäßen Versteifungsstrebe, in der die Durchtrittsöffnung durch eine Aussparung bei der Faserwicklung erhalten wird,
- Fig. 15: eine Draufsicht auf das Anbindungsende einer erfindungsgemäßen Versteifungsstrebe mit einem Faserverstärkungsbereich um die Durchtrittsöffnung
- Fig. 16: in einer seitlichen Schnittdarstellung ein Anbindungsende einer erfindungsgemäßen Versteifungsstrebe mit einem die Durchtrittsöffnung aufweisenden Metallschuh.

Die Erfindung betrifft eine FVK-Versteifungsstrebe, die insbesondere zur Anbringung am Unterboden einer Kraftfahrzeugkarosserie, beispielsweise eines Cabriolets, als Diagonalstrebe ausgebildet ist.

Dadurch, dass die Diagonalstrebe aus einem Faserverbundwerkstoff beschaffen ist, können bis zu 60 % des Gewichts von entsprechenden Stahlstreben eingespart werden. Während vier Stahlstreben zur Versteifung eines E-Klasse Carbrios A 207 etwa 12,5 kg wiegen, liefern Diagonalstreben, die erfindungsgemäß aus Faserverbundwerkstoff beschaffen sind, bei gleicher Funktion 7,5 kg weniger Gewicht.

Die herkömmliche Diagonalstrebe aus Stahl mit einem Elastizitätsmodul (E-Modul) von 210.000 N/mm² kann durch eine FVK-Strebe, insbesondere eine CFK-Strebe mit duroplastischer Matrix und einem sehr hohen Faseranteil von ca. 70 % substituiert werden, indem das geringere Elastitzitätsmodul der CFK-Strebe von ca. 150.000 N/mm² über einen ca. 30 % größeren Querschnittsfläche kompensiert wird. Dadurch wird die gleiche Steifigkeit und damit Versteifungsfunktion wie mit der Stahlstrebe bei der genannten, vorteilhaften Gewichtseinsparung erreicht. Des Weiteren zeigen die erfindungsgemäßen Streben aus CFK im Vergleich zu Serienstreben deutliche Verbesserungen im NVH-Bereich (Noise Vibration Harshness), insbesondere in der Weise, dass die Anregungen im Bereich des Mikrostuckerns besser gedämpft werden.

Außer einer mit Carbonfasern verstärkten Kunststoffstrebe sind auch andere Faserverbundwerkstoffstreben denkbar, es ist auch möglich, eine Mischbauweis it einer Leichtmetall-Legierungsmatrix, beispielsweise auf Aluminium- oder Magnesiumbasis einzusetzen.

Essentiell ist, dass die Fasern der Diagonalstrebe unidirektional in Belastungsrichtung verlaufen und die somit geradlinig verlaufende Strebe eine nahezu gleichbleibende Querschnittsfläche über ihre gesamte Länge aufweist. Durch den unidirektionalen Aufbau der Verstärkungsfasern wird die gewünschte hohe Steifigkeit in der Belastungsrichtung erreicht.

Die Diagonalstreben können dabei einfach und kostengünstig im Pultrusionsverfahren (auch Pullwinding oder Pullbriding genannt) kontinuierlich hergestellt werden. Der Herstellungsprozess ist damit sehr wirtschaftlich und großserientauglich, automatisierbar und benötigt relativ wenig Investitionen für Anlagen und Werkzeuge. Aus den geraden pultrudierten Endlosprofilen können Strebenrohlinge abgelängt werden, woraufhin die Anbindungsbereiche zur Anbindung der Streben an den Unterboden des Kraftfahrzeugs bearbeitet werden können, beispielsweise indem Anschraubpunkte angebracht werden. Das Pultrusionsverfahren bietet weiter den Vorteil, dass ein sehr hoher Fasergehalt zu erreichen ist und zudem Werkstoff-Hybridisierungen beispielsweise mit einem Metallkern oder einem Metallgewebe möglich sind. Im Vergleich zu den restlichen (heute bekannten) FVK-Verarbeitungstechniken sind mit dem Pultrusionsverfahren die niedrigsten Leichtbaukosten zu erzielen. Während beim Pultrusionsverfahren zweidimensionale Ausformungen der Strebe möglich sind, kann anstelle dessen durch die Verwendung eines Pressverfahrens eine dreidimensionale Konturierung der Strebe erreicht werden.

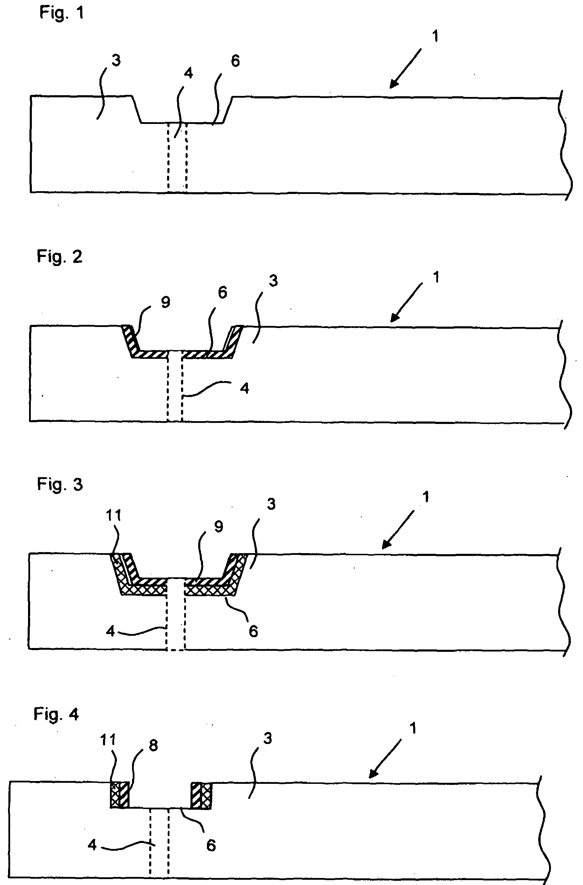

Die Fig. 1 bis 15 zeigen den Anbindungsabschnitt 3 der erfindungsgemäßen Diagonalstrebe 1 aus einem Faserverbundwerkstoff mit unidirektionalen Fasern.

In Fig. 1 ist im Anbindungsabschnitt 3 die Fügestelle 6 mit einer verjüngten Querschnittsfläche zu sehen, in dem sich auch die Durchtrittsbohrung 4 befindet. Hier kann die Diagonalstrebe 1 direkt mit der Karosserie verschraubt werden. Die Durchtrittsbohrung 4 kann eine gefräste Bohrung sein, die Karosserie sollte im Anschraubbereich zur Vermeidung von Kontaktkorrosion lackiert sein.

Fig. 2 zeigt eine metallische Auskleidung 9 der Fügestelle 6, die eine "Metallwanne" 9 ist. Sie kann direkt, beispielsweise schon während der Herstellung, eingebracht wurd ⁻in solches metallisches Verschraubungsende kann zur Vermeidung von Kontaktkorrosion antikorrosiv beschichtet, vorzugsweise lackiert sein. In Fig. 3 ist die Metallwanne 9 in die Fügestelle 6 des Anbindungsbereichs 3 eingeklebt.

In Fig. 4 ist als Auskleidung des Durchtritts 4 eine Hülse oder ein Insert 8 mittels einer Klebeschicht 11 in der Fügestelle 6 befestigt. Hierin wird im Übrigen unter "Insert" eine Hülse oder Buchse, gegebenenfalls mit Gewinde, verstanden. Eine Hülse, wie sie hierin gemeint ist, muss keine Zylinderform aufweisen. Das Insert 8 kann in die Fügestelle 6 oder auch in den Durchtritt 4 eingesetzt sein.

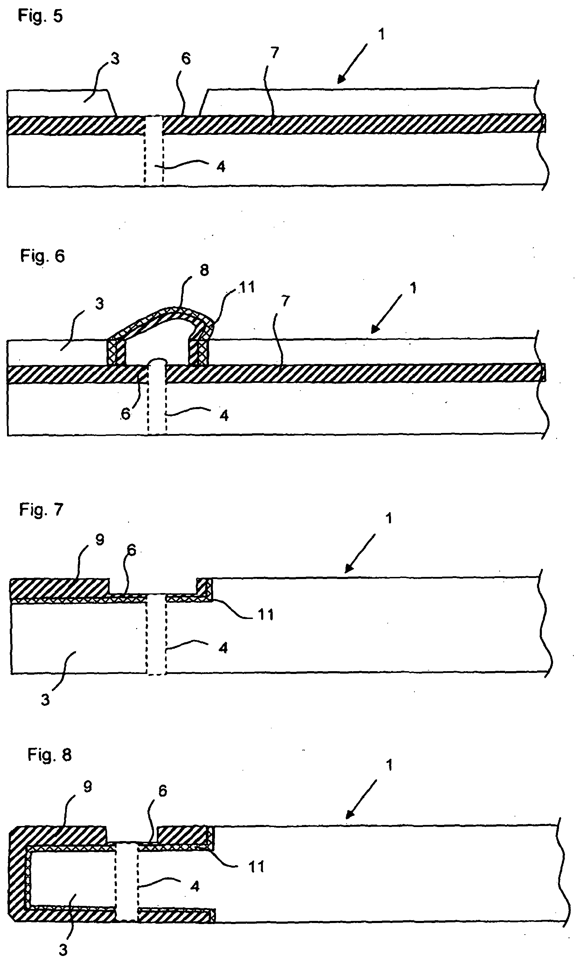

In die Diagonalstrebe 1 aus Fig. 5 ist zur weiteren Stabilisierung, insbesondere in den Durchtrittsöffnungsbereichen, ein Metallkern 7 eingearbeitet und zwar derart, dass er die die Fügestelle 6 kontaktiert. Das Durchtrittsloch 4 verläuft durch den Metallkern 7, wie auch in Fig. 6. Dort ist die Fügestelle 6 durch ein eingeklebtes Insert 8 verstärkt.

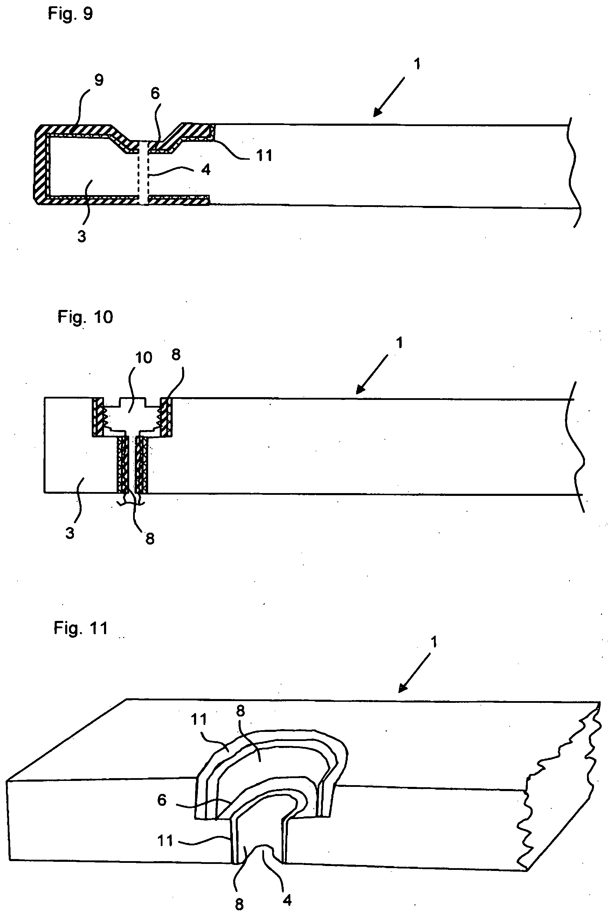

In Fig. 7 weist der gesamte Anbindungsabschnitt 3 eine einseitig verjüngte Querschnittsfläche auf; ein Metallverkleidungsteil 9 ist dabei so ausgebildet, dass es die Kontur der Fügestelle 6 ergänzt. Auch in Fig. 8 ist der Anbindungsabschnitt 3 der Diagonalstrebe 1 verjüngt, hier ist der Anbindungsabschnitt 3 komplett von einem Metallverkleidungsteil 9 umgeben, das mittels Klebeschicht 11 angefügt ist, wobei auch hier, wie in Fig. 7, die Fügestelle 6 in dem Metallverkleidungsteil 9 bereitgestellt ist. Fig. 9 zeigt nochmals eine alternative Fügestelle 6 eines vollständig mit einer Metallverkleidung 9 umhüllten Anbindungsabschnitts 3.

In dem Anbindungsabschnitt 3 der Diagonalstrebe aus Fig. 10 sind in die Fügestelle 6 und die Durchtrittsöffnung 4 Inserts 8 mit Innengewinden eingeklebt. Sie können allerdings alternativ auch eingepresst oder eingenietet oder schon im Herstellungsprozess integriert worden sein, um das Setzverhalten der Verschraubung mittels der Schraube 10 zu optimieren.

Fig. 11 zeigt diese Variante noch in dreidimensionaler Schnittansicht, in der die Metallhülsen 8,9 mit Innengewinde in die Fügestelle 6 und die Durchtrittsöffnung 4 eingebracht sind.

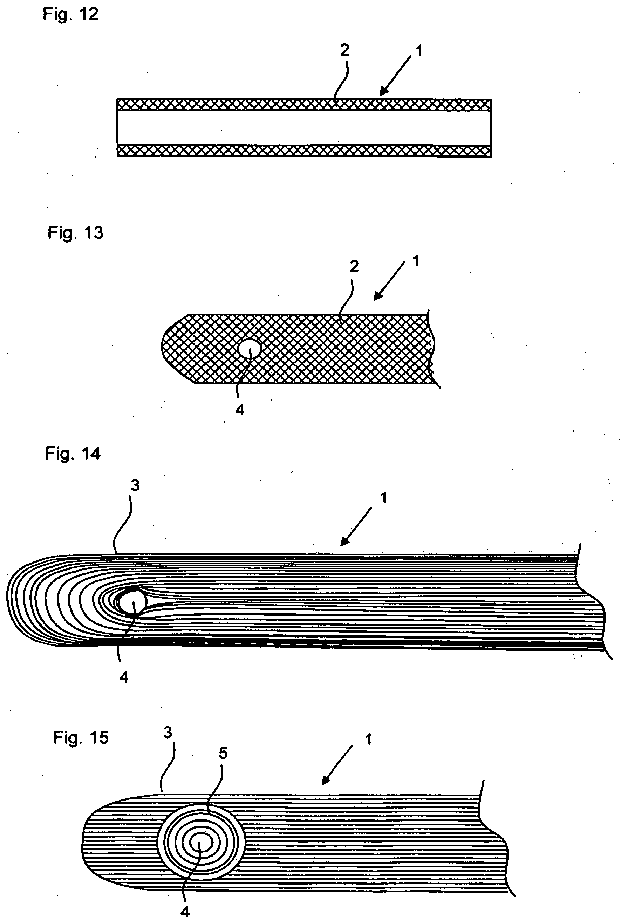

Fig. 12 zeigt die Schutzschicht 2 zum Schutz des innen liegenden Diagonalstret rofils 1 vor Steinschlag, Missbrauch, Korrosion und aggressiven Medien. Bei der dargestellten Schutzschicht 2 handelt es sich, wie auch in Fig. 13, um eine vorzugsweise aus Glasfasern gebildete Faserwicklung, deren Fasern mit einem Versatzwinkel von 45° in Bezug zu den Diagonalstrebenfasern gewickelt sind.

Alternativ könnte es sich bei der Schutzschicht auch um ein Vlies oder einen elastischen Mantel aus Gummi, einem Elastomer oder aus einem Thermoplast handeln. Vorzugsweise soll das Material schlauchförmig sein und auf die Diagonalstrebe thermisch aufgeschrumpft werden können. Ferner ist es denkbar, ein abriebfestes schlagzähes Material einzusetzen wie beispielsweise ein Stahlgeflecht, eine Stahlfolie oder ein metallisches Hohlprofil.

Fig. 14 und 15 beziehen sich auf die Krafteinleitung beziehungsweise die Kraftübertragung; sie zeigen auch das Anbindungsende 3 zweier Diagonalstreben 1. Hier sind die unidirektional angeordneten Fasern zu sehen, wobei in Fig. 14 die Fasern am Strebenende 3 um die Durchtrittsöffnung 4 geführt sind, die somit im Herstellungsprozess ausgespart wird.

In Fig. 15 ist die Durchtrittsöffnung 4 zusätzlich mit der Faserverstärkungstruktur 5 ausgestattet, die eine kraftflussgerechte Lochverstärkung darstellt und durch radiale und ringförmige Faserabschnitte gekennzeichnet ist.

Damit stellt die erfindungsgemäße Kraftfahrzeugkarosserie, die leichte und dennoch maximal steife Diagonalstreben aufweist, eine sehr gute Lösung für eine Kraftfahrzeugkarosserie auch im Cabrioletbereich zur Verfügung, die es erlaubt, einen bestmöglichen Sicherheitsstandard zu erhalten und dennoch dem Leichtbaugedanken Rechnung zu tragen.

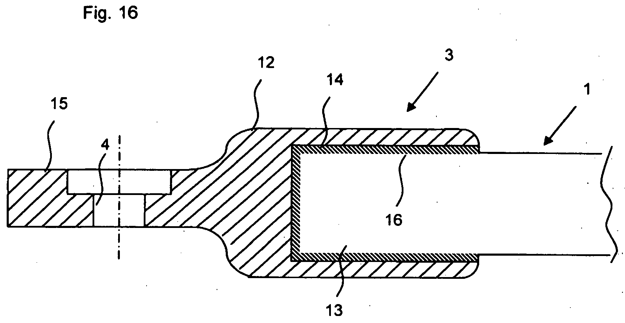

Die Fig. 16 befasst sich mit einer besonderen Anbindung der Strebe 1 an angrenzende Karosseriebauteile. Um Schwächungen der Strebe durch eingebrachte Durchtrittsöffnungen 4 zu vermeiden, wird ein Metallschuh 12 bereitgestellt, der eine Aufnahmemulde 14 aufweist, mit welcher er auf ein Ende 13 der Strebe 1 aufgeschoben wird. Denkbar ist auch ein Aufpressen oder Aufschrumpfen des Schuhs 12 auf die Strebe 1, so dass eine hohe kraftschlüssige Verbindung zwischen Schuh 12 und Strebe 1 entsteht.

Der Schuh 12 weist einen abstehenden Befestigungsflansch 15 auf, mittels dessen die am Schuh 12 befestigte Strebe 1 an den Karosseriebauteilen befestigt werden kann. Hier sind alle gängigen Befestigungsmethoden wie beispielsweise Schweißen, Löten, Clinchen Kleben, Clipsen möglich. Bei letzterer ist am Flansch 15 ein Hinterschnitt auszubilden. Anstelle des Flansches 15 kann auch am Schuh 12 ein rotationssymmetrischer Stutzen ausgebildet sein, der ein Außengewinde trägt, so dass die Strebe 1 mit dem Metallschuh 12 gemeinsam in ein Karosseriebauteil eingeschraubt werden kann. Ferner sind am Stutzen in dem Zusammenhang Vorkehrungen zur Realisierung eines BajonettVerschlusses denkbar.

Im vorliegenden flachen Flansch 15, also außerhalb der Strebe 1 liegend, ist auf dem jeweiligen Anbindungsabschnitt 3 eine Durchtrittsöffnung 4 geschaffen, die zur Befestigung der Strebe 1 an Karosseriebauteilen mittels einer Schraube oder eines Nietes dient. Gegebenenfalls erfolgt dies über eine Buchse, die in der Durchtrittsöffnung 4 zu befestigen ist. Der Metallschuh 12 kann ein Schmiede-, Guss-, Fräs- oder Drehteil sein; denkbar ist auch ein hülsenartiges Hohlprofil, das im Bereich des Flansches 15 entsprechend gequetscht ist. Die Aufnahmemulde 14 ist zumindest im Kontaktbereich des Schuhs 12 mit der Strebe 1 zur Vermeidung von Kontaktkorrosion antikorrosiv beschichtet. Alternativ kann auch das Ende 13 der Strebe 1 eine derartige Beschichtung 16 besitzen.

Alternativ oder zusätzlich zur geschilderten Befestigung der Strebe 1 mit dem Metallschuh 12 kann auch eine Verklebung zum Einsatz kommen, deren entstehende Klebeschicht zudem als Korrosionshemmer dient und die Beschichtung 16 bildet. Zur äquidistanten Ausrichtung der Strebe 1 in der Aufnahmemulde 14 des Metallschuhs 12 können in der Klebeschicht kleine Kugeln, vorzugsweise aus Glas, gleichen Durchmessers angeordnet sein. Des Weiteren ist es denkbar, dass ein oder mehrere Kanäle im Metallschuh 12 im Bereich der Aufnahmemulde 14 ausgebildet sind, die von dieser nach außen führen. Dadurch ist überflüssiger Klebstoff nach außen gezielt abführbar. Hierbei ist auch möglich über diese Kanäle erst den Klebstoff den beiden Verbindungspartnern Metallschuh 12 und Strebenende 13 zuzuführen. Durch die Verklebung wird zwischen dem Metallschuh 12 und der Strebe 1 eine besonders sichere Verbindung geschaffen, die hohen mechanischen Belastungen ausgesetzt werden kann ohne sich zu lösen.

Obwohl die hier beschriebene Versteifungsstrebe als Diagonalstrebe zur Verstärkung des Unterbodens verwandt wird, ist eine Ausweitung des Anwendungsbereichs auf die gesamte Fahrzeugkarosserie möglich. Hierbei kann die Strebe 1 nicht nur als Zusatzbauteil zur Versteifung der Karosseriestruktur eingesetzt werden; es ist auch ein Ersatz von Strukturbauteilen durch die Strebe 1 denkbar.

## Patentansprüche

1. Kraftfahrzeugkarosserie mit Versteifungsstreben (1), die aus einem Faserverbundwerkstoff beschaffen sind, wobei jede Versteifungsstrebe (1) beidenends über einen Anbindungsabschnitt (3) an angrenzende Karosseriebauteile angebunden ist, wobei die Querschnittsfläche der Versteifungsstrebe (1) zumindest zwischen den Anbindungsabschnitten (3) der Versteifungsstrebe (1) entlang einer Länge der Versteifungsstrebe (1) gleichbleibend ist,
**dadurch gekennzeichnet, dass**
die Fasern der Versteifungsstrebe (1) im Wesentlichen unidirektional in Belastungsrichtung der Versteifungsstrebe (1) verlaufen.

2. Kraftfahrzeugkarosserie nach Anspruch 1,
**dadurch gekennzeichnet, dass**
für eine vorgegebene Kraftfahrzeugkarosserie die Querschnittsfläche der FVK-Versteifungsstrebe (1) so gewählt wird, dass das Produkt der Querschnittsfläche mit dem E-Modul der FVK-Versteifungsstrebe (1) einem Produkt entspricht, das sich aus der Querschnittsfläche einer Stahl-Versteifungsstrebe und deren E-Modul für die vorgegebene Kraftfahrzeugkarosserie ergibt, wobei die Querschnittsfläche der FVK-Versteifungsstrebe (1) wenigstens um 20 %, bevorzugt um mehr als 25 %, stärker bevorzugt mehr als um 30 % größer ist als die Querschnittsfläche der Stahl-Versteifungsstrebe.

3. Kraftfahrzeugkarosserie nach Anspruch 1 oder 2,
**dadurch gekennzeichnet, dass**
die Versteifungsstrebe (1) zumindest teilweise von einer Schutzschicht (2) umhüllt ist.

4. Kraftfahrzeugkarosserie nach Anspruch 3,
**dadurch gekennzeichnet, dass**
die Schutzschicht (2) durch
- ein Faservlies oder durch eine Faserwicklung, insbesondere durch eine Glasfaserwicklung, wobei die Fasern der Faserwicklung vorzugsweise mit einem Winkelversatz in Bezug zu den Fasern der unidirektionalen Faseranordnung der Versteifungsstrebe (1) gewickelt sind oder
- ein abriebfestes, schlagzähes Material, insbesondere ein Stahlgeflecht oder eine Stahlfolie oder ein metallisches Hohlprofil, oder
- ein thermoplastisches oder elastomeres Material, insbesondere ein thermisch auf die Versteifungsstrebe (1) aufschrumpfbares schlauchförmiges Material ausgebildet ist.

5. Kraftfahrzeugkarosserie nach zumindest einem der Ansprüche 1 bis 4,
**dadurch gekennzeichnet, dass**
die Versteifungsstrebe (1) eine pultrudierte oder gepresste Faserverbundwerkstoff-Versteifungsstrebe (1) ist, die einen Fasergehalt im Bereich von 50 % bis 75 %, bezogen auf das Gesamtvolumen des Faserverbundwerkstoffs, bevorzugt von 65 %, besonders bevorzugt von 70 % aufweist.

6. Kraftfahrzeugkarosserie nach zumindest einem der Ansprüche 1 bis 5,
**dadurch gekennzeichnet, dass**
der Faserverbundwerkstoff
- ein Carbonfaserverbundwerkstoff mit einer Kunststoffmatrix
- ein Hybrid-Faserverbundwerkstoff ist, der eine Leichtmetalllegierungsmatrix, insbesondere eine Aluminium- oder eine Magnesium-Legierungsmatrix und/oder Metallfasern umfasst.

7. Kraftfahrzeugkarosserie nach zumindest einem der Ansprüche 1 bis 6,
**dadurch gekennzeichnet, dass**
die Versteifungsstrebe (1) entlang der Strebenlänge einen innen liegenden Metallkern (7) umfasst.

8. Kraftfahrzeugkarosserie nach zumindest einem der Ansprüche 1 bis 7,
**dadurch gekennzeichnet, dass**
die Anbindungsabschnitte (3) jeweils eine Fügestelle (6) mit zumindest einer Durchtrittsöffnung (4) zur Aufnahme eines Verbindungselements (10), insbesondere zur Aufnahme einer Schraube (10), aufweisen,
wobei die Durchtrittsöffnung (4)
- eine gefräste Durchtrittsöffnung (4),
- eine im Herstellungsprozess ausgesparte Durchtrittsöffnung (4) und/oder
- eine durch ein Insert (8) bereitgestellte Durchtrittsöffnung (4) ist,
oder wobei der jeweilige Anbindungsabschnitt (3) einen mit einer außerhalb der Strebe (1) liegenden Durchtrittsöffnung (4) versehenen Metallschuh (12) umfasst, der auf ein Ende (13) der Strebe (1) geschoben und mit diesem unter Bildung einer Klebeschicht im gesamten Kontaktbereich zwischen Strebe (1) und Metallschuh (12) verklebt ist.

9. Kraftfahrzeugkarosserie nach Anspruch 8,
**dadurch gekennzeichnet, dass**
die Durchtrittsöffnung (4) von einem Faserverstärkungsbereich (5) umgeben ist, wobei die Fasern des Faserverstärkungsbereichs (5) ringförmig konzentrisch, tangential und/oder radial um die Durchtrittsöffnung (4) angeordnet sind.

10. Kraftfahrzeugkarosserie nach Anspruch 7 oder 8,
**dadurch gekennzeichnet, dass**
zumindest die Fügestelle (6) des Anbindungsabschnitts (3) eine Verstärkungsstruktur (7,8,9) aufweist, die durch
- den innen liegenden Metallkern (7),
- das Insert (8),
- oder eine Metallverkleidung (9) ausgebildet ist.

## Claims

1. Motor vehicle body with stiffening struts (1) constructed from a fibre composite material, wherein each stiffening strut (1) is connected at both ends to adjoining body components via a respective connection section (3), wherein the cross-sectional area of the stiffening strut (1) remains constant at least between the connection sections (3) of the stiffening strut (1) along the length of the stiffening strut (1), **characterised in that**
the fibres of the stiffening strut (1) extend substantially unidirectionally in the direction of loading of the stiffening strut (1).

2. Motor vehicle body according to claim 1,
**characterised in that**
for a predefined motor vehicle body the cross-sectional area of the FRP stiffening strut (1) is selected so that its product with the modulus of elasticity of the FRP stiffening strut (1) corresponds to a product of the cross-sectional area of a steel stiffening strut and its modulus of elasticity for the predefined motor vehicle body, wherein the cross-sectional area of the FRP stiffening strut (1) is at least 20% greater, preferably more than 25% greater, more preferably more than 30% greater than the cross-sectional area of the steel stiffening strut.

3. Motor vehicle body according to claim 1 or 2,
**characterised in that**
the stiffening strut (1) is at least partially encased by a protective layer (2).

4. Motor vehicle body according to claim 3,
**characterised in that**
the protective layer (2) is formed by
- a non-woven material or a wound fibre, in particular by a wound glass fibre, wherein the fibres of the wound fibre are preferably wound with an angular offset with respect to the fibres of the unidirectional fibre arrangement of the stiffening strut (1), or
- a non-abrasive, impact-resistant material, in particular a steel mesh or a steel foil or a metallic hollow profile, or
- a thermoplastic or elastomer material, in particular a tubular material that can be thermally shrunk onto the stiffening strut (1).

5. Motor vehicle body according to at least one of claims 1 to 4, **characterised in that**
the stiffening strut (1) is a pultruded or pressed fibre composite material stiffening strut (1) which has a fibre content in the range of from 50% to 75%, based on the total volume of the fibre composite material, preferably of 65%, particularly preferably of 70%.

6. Motor vehicle body according to at least one of claims 1 to 5, **characterised in that**
the fibre composite material comprises
- a carbon fibre composite material with a plastic matrix,
- a hybrid fibre composite material with a light metal alloy matrix, in particular an aluminium or magnesium alloy matrix and / or metal fibres.

7. Motor vehicle body according to at least one of claims 1 to 6, **characterised in that**
the stiffening strut (1) comprises an inner lying metal core (7) along the length of the strut.

8. Motor vehicle body according to at least one of claims 1 to 7, **characterised in that**
the connection sections (3) respectively have a joining point (6) with at least one passage opening (4) configured to receive a connection element (10), in particular to receive a screw (10),
wherein the passage opening (4) is
- a milled passage opening (4),
- a passage opening (4) recessed out during the production process, and / or
- a passage opening (4) provided by an insert (8),
or wherein the respective connection section (3) comprises a metal shoe (12) with a passage opening (4) lying outside of the strut (1), the metal shoe is pushed onto one end (13) of the strut (1) and is attached by adhesive to the one end (13) with the formation of an adhesive layer in the whole area of contact between the strut (1) and the metal shoe (12).

9. Motor vehicle body according to claim 8,
**characterised in that**
the passage opening (4) is surrounded by a fibre-reinforced region (5), wherein the fibres of the fibre-reinforced region (5) are formed in concentric rings, arranged tangentially and / or radially around the passage opening (4).

10. Motor vehicle body according to claim 7 or 8,
**characterised in that**
at least the joining point (6) of the connection section (3) has a reinforcing structure (7, 8, 9) formed by
- the inner lying metal core (7),
- the insert (8),
- or a metal cladding (9).

## Revendications

1. Carrosserie de véhicule automobile comprenant des barres de renfort (1) qui sont fabriquées dans un matériau composite renforcé par des fibres, chaque barre de renfort (1) à chaque extrémité est reliée par une section de liaison (3) aux composants de carrosserie adjacents, la surface de coupe transversale de la barre de renfort (1) étant constante au moins entre les sections de liaison (3) de la barre de renfort (1) sur la longueur de la barre de renfort (1), **caractérisée en ce que** les fibres de la barre de renfort (1) s'étendent essentiellement de manière unidirectionnelle dans le sens de la charge de la barre de renfort (1).

2. Carrosserie de véhicule automobile selon la revendication 1, **caractérisée en ce que** pour une carrosserie définie de véhicule automobile la surface de coupe transversale de la barre de renfort (1) en matériau composite renforcé par des fibres est sélectionnée de sorte que le produit de la surface de coupe transversale avec le module E de la barre de renfort (1) en matériau composite renforcé par des fibres corresponde à un produit qui résulte de la surface de coupe transversale d'une barre de renfort en acier et de son module E pour la carrosserie définie de véhicule automobile, la surface de coupe transversale de la barre de renfort (1) en matériau renforcé par des fibres étant plus épaisse au moins de 20 %, de préférence de plus de 25 %, de préférence supérieure de plus de 30 % que la surface de coupe transversale de la barre de renfort en acier.

3. Carrosserie de véhicule automobile (1) selon la revendication 1 et la revendication 2, **caractérisé en ce que** la barre de renfort (1) est enveloppée au moins partiellement par une couche de protection (2).

4. Carrosserie de véhicule automobile selon la revendication 3, **caractérisée en ce que** la couche de protection (2) est conçue par
- un non-tissé ou un enroulement filamentaire, en particulier un enroulement filamentaire de fibres de verre, les fibres de l'enroulement filamentaire étant enroulées de préférence avec un déplacement angulaire par rapport aux fibres de la disposition unidirectionnelle des fibres de la barre de renfort (1) ou
- en un matériau résistant à l'usure, aux chocs, en particulier un treillis d'acier ou une feuille d'acier ou encore un profilé creux métallique, ou
- en un matériau thermoplastique ou élastomère, en particulier un matériau tubulaire thermorétractable sur la barre de renfort (1).

5. Carrosserie de véhicule automobile selon l'une quelconque des revendications 1 à 4, **caractérisée en ce que** la barre de renfort (1) est une barre de renfort (1) en matériau composite renforcé par des fibres comprimé ou pultrudé, qui présente une teneur en fibres dans une plage comprise entre 50 % et 75 %, par rapport au volume total du matériau composite renforcé par des fibres, de préférence de 65 %, de préférence encore de 70%.

6. Carrosserie de véhicule automobile selon l'une quelconque des revendications 1 à 5, **caractérisée en ce que** le matériau composite renforcé de fibres
- comprend un matériau composite de fibres de carbone ayant une matrice en matière plastique ;
- est un matériau composite hybride renforcé par des fibres qui comprend une matrice d'alliage de métal léger, en particulier une matrice d'alliage de magnésium ou d'aluminium et/ou des fibres métalliques.

7. Carrosserie de véhicule automobile selon l'une quelconque des revendications 1 à 6, **caractérisée en ce que** la barre de renfort (1) comprend un noyau métallique (7) intérieur sur la longueur de la barre.

8. Carrosserie de véhicule automobile selon l'une quelconque des revendications 1 à 7, **caractérisée en ce que** les sections de liaison (3) présentent respectivement un point de jonction (6) ayant au moins une ouverture de passage (4) destinée à recevoir un élément de liaison (10), en particulier destiné à recevoir une vis (10), l'ouverture de passage (4) étant
- une ouverture de passage (4) fraisée,
- une ouverture de passage (4) évidée pendant le processus de fabrication et/ou,
- une ouverture de passage (4) préparée par une pièce rapportée (8),
ou chaque section de liaison (3) respective comprenant un sabot métallique (12) pourvu d'une ouverture de passage (4) se trouvant à l'extérieur de la barre (1), qui est poussé sur une extrémité (13) de la barre (1) et est collé à celui-ci pour former une couche de colle dans toute la zone de contact entre la barre (1) et le sabot métallique (12).

9. Carrosserie de véhicule automobile selon la revendication 8, **caractérisée en ce que** l'ouverture de passage (4) est entourée par une zone (5) renforcée par des fibres, les fibres de la zone (5) renforcée par des fibres sont disposées de manière annulaire, concentrique, tangentielle et/ou radiale autour de l'ouverture de passage (4).

10. Carrosserie de véhicule automobile selon la revendication 7 ou la revendication 8, **caractérisée en ce qu'**au moins le point de jonction (6) de la section de liaison (3) présente une structure de renfort (7, 8, 9) qui est conçue par
- le noyau métallique interne (7),
- la pièce rapportée (8),
- ou un revêtement métallique (9).
